# EUROPÄISCHE PATENTSCHRIFT

(11) **EP 2 452 088 B1**
(45) Veröffentlichungstag und Bekanntmachung des Hinweises auf die Patenterteilung: **12.08.2015**
(21) Anmeldenummer: 10728214.7
(22) Anmeldetag: 28.06.2010
(51) Int. Cl.: F16C 32/04, F16C 19/50, F16C 39/02

(54) **FANGLAGER ZUM AUFFANGEN EINER ROTORWELLE EINER MASCHINE**
SAFETY BEARING FOR RETAINING A ROTOR SHAFT OF A MACHINE
PALIER DE RETENUE POUR LA RÉCEPTION D'UN ARBRE DE ROTOR D'UNE MACHINE

(30) Priorität: 06.07.2009 DE 102009031887
(43) Veröffentlichungstag der Anmeldung: 16.05.2012
(73) Patentinhaber: Siemens Aktiengesellschaft, 80333 München (DE)
(72) Erfinder: SCHUBERT, Gunnar, 16547 Birkenwerder (DE); WALTER, Hartmut, 10115 Berlin (DE); ZÜLOW, Daniel, 90489 Nürnberg (DE)
(86) Internationale Anmeldenummer: PCT/EP2010/059117
(87) Internationale Veröffentlichungsnummer: WO 2011/003759

(56) Entgegenhaltungen:
- WO-A1-03/038973
- DE-A1-102006 017 933
- DE-T2- 60 209 752
- JP-A- 11 101 236
- US-A- 5 021 697
- US-A- 5 752 774

## Beschreibung

Die Erfindung betrifft ein Fanglager zum Auffangen einer Rotorwelle einer Maschine.

Zur Lagerung der rotierenden Rotorwelle bei einer Maschine werden heutzutage immer öfter Magnetlager zur betriebsmäßigen Lagerung der Rotorwelle eingesetzt, die mit Hilfe magnetischer Felder die rotierende Rotorwelle in einem Schwebezustand halten. Bei Ausfall des Magnetlagers, z.B. infolge eines Stromausfalls, fällt die Rotorwelle in ein Fanglager und wird von diesem aufgefangen. Ein Fanglager dient solchermaßen zum Auffangen der Rotorwelle. Das Fanglager übernimmt bis zu einem vollständigen Anhalten der Rotorwelle temporär die Lagerung der Rotorwelle. Fanglager müssen zum Einen den Stoß beim Absturz der rotierenden Rotorwelle in das Fanglager aushalten und zum Anderen ein sicheres Austrudeln der Rotorwelle in dem Fanglager gewährleisten. Das Fanglager weist hierzu einen im Vergleich zum Rotorwellendurchmesser geringfügig größeren Innendurchmesser auf, so dass die Rotorwelle im Normalbetrieb, d.h. bei aktivem Magnetlager, das Fanglager nicht berührt. Üblicherweise ist das Fanglager im Bereich des jeweiligen Endes der Rotorwelle im Ständergehäuse der Maschine untergebracht.

Fanglager müssen zum einen den Stoß bei Absturz der rotierenden Rotorwelle in das Fanglager aushalten, und zum anderen ein sicheres Austrudeln der Rotorwelle in dem Fanglager gewährleisten. Dazu müssen bestimmte Reibverhältnisse und kinematische Bedingungen vorhanden sein. Zu hohe Reibwerte zwischen den reibenden oder abrollenden Bauteilen führen innerhalb kürzester Zeit zu starker Erwärmung und damit zu einer geringen Standzeit des Fanglagers. Dies führt dazu, dass ein ungebremstes Auslaufen der Rotorwelle in den Fanglagern in den meisten Fällen nicht möglich ist. Zum sicheren Betrieb von Maschinen, bei denen die Rotorwelle mittels Magnetlager gelagert ist, müssen daher im Allgemeinen Bremseinrichtungen zum Abbremsen der Rotorwelle vorgesehen werden.

Bei Ausfall eines magnetischen Lagers fällt die Rotorwelle, wie schon gesagt in das Fanglager. Dabei besteht die Gefahr, dass die Rotorwelle in einen so genannten "Backward-Whirl" gerät und sich entlang der Innenfläche des Fanglagers abrollt. Im Gegensatz zur drehsynchronen Rotorbewegung, bei der die Rotorauslenkung synchron mit der umlaufenden Unwuchterregung erfolgt, durchläuft bei einem Backward-Whirl die Rotorwelle den Orbit in umgekehrter Richtung zur Rotorwellendrehung mit sehr großer Amplitude. Dabei überlagert sich ein drehsynchroner Anteil mit sehr viel kleinerer Amplitude, so dass sich ein ellipsenförmiger Orbit ergibt.

Die Bedingungen zum Auftreten eines Backward-Whirl sind vielfältig. Das Auftreten eines Backward-Whirls führt im Allgemeinen, wegen der dabei sehr großen auftretenden Kräfte, zu einer Störung oder Beschädigung der Maschine.

Aus dem Stand der Technik ist der Einsatz von Wälzlagern als Fanglager bekannt. Dabei ist der Außenring des Wälzlagers mit dem Lagerschild verbunden. Der Innendurchmesser des Innenrings des Fanglagers ist dabei etwas größer als der Außendurchmesser der Rotorwelle. Die Rotorwelle fällt beim Absturz in den Innenring, wodurch nach sehr kurzer Zeit der Innenring und die Wälzkörper beschleunigt werden und die Rotorwelle ausläuft. Ein Fanglager auf Basis eines Wälzkörperlagers ist zum einen für hohe Rotorgewichte ungeeignet und zum anderen ist die Gefahr des Auftretens eines Backward-Whirl vorhanden.

Weiterhin ist auch der Einsatz von Trockengleitlagern als Fanglager bekannt. Die Rotorwelle fällt dabei direkt in einen feststehenden Ring, der aus einzelnen beschichteten Lagerschalen besteht und läuft dort aus. Dabei kann die Rotorwelle bei ungünstigen Reibverhältnissen in den Backward Whirl geraten.

Bisher wurde versucht, durch aufwändige Nachweise mittels Berechnungen und Versuche zu zeigen, dass bei den oben bekannten Fanglagern ein Backward Whirl unter Berücksichtigung aller bekannten Randbedingungen nicht auftritt. Eine solche Vorgehensweise ist zeitaufwändig und kostenintensiv.

Aus der US 57 52 774 A ist ein Hilfslager für eine Welle bekannt, welche im Normalbetrieb mittels einer Magnetlagerung gehalten wird. Diese besteht aus einer Vielzahl von Rollen, die in einem gemeinsamen, ortsfesten Tragkörper gelagert sind und durch eine Radialbeweglichkeit bezüglich der zu lagernden Welle radial von dieser beanstandet werden können.

Es ist Aufgabe der Erfindung, ein Fanglager zu schaffen, bei dem die Wahrscheinlichkeit des Auftretens eine Backward-Whirl gegenüber von aus dem Stand der Technik bekannten Fanglagern stark reduziert ist.

Diese Aufgabe wird gelöst durch ein Fanglager nach Anspruch 1.

Vorteilhafte Ausbildungen der Erfindung ergeben sich aus den abhängigen Ansprüchen.

Durch die elastischen Elemente, welche zwischen dem ersten Tragekörper und dem zweiten Tragekörper angeordnet sind, wird die Stoßbelastung, welche auf die Rollenkörper und die Wälzlager bei einem Absturz der Rotorwelle in das Fanglager einwirkt, vermindert.

Es erweist sich als vorteilhaft, wenn die Rollkörper als Rollen ausgebildet sind. Rollen stellen eine übliche Ausbildung der Rollkörper dar und sind besonders einfach und kostengünstig herzustellen.

Weiterhin erweist sich als vorteilhaft, wenn der erste Tragekörper als Ring ausgebildet ist, da ein Ring eine mechanisch besonders stabile Form aufweist.

Ferner erweist es sich als vorteilhaft, wenn die Rollkörper über den Umfang des ersten Tragekörpers gleichmäßig verteilt angeordnet sind, da dann ein Backward-Whirl besonders zuverlässig verhindert werden kann.

Ferner erweist es sich als vorteilhaft, wenn die Rollkörper jeweilig über eine Achse und mindestens ein Wälzlager drehbar mit dem ersten Tragekörper verbunden sind, da dann ein besonders niedriger Reibwert erzielt wird.

Weiterhin erweist sich als vorteilhaft, wenn der zweite Tragekörper als Ring ausgebildet ist, da ein Ring eine mechanisch besonders stabile Form aufweist.

Weiterhin erweist es sich als vorteilhaft, wenn die elastischen Elemente als Feder-Dämpferelemente oder als Dämpferelemente ausgebildet sind. Die genannten Ausbildungen der elastischen Elemente stellen übliche Ausbildungen der elastischen Elemente dar.

Ferner erweist es sich als vorteilhaft, wenn die elastischen Elemente, bezogen auf die virtuelle geometrische Mittenachse, radial fluchtend zu den Rollkörpern angeordnet sind.

Ferner erweist es sich als vorteilhaft, wenn die elastischen Elemente in tangentialer Richtung versetzt zu den Rollkörpern angeordnet sind. Hierdurch wird eine besonders einfache Gesamtanordnung geschaffen.

Ferner erweist es sich als vorteilhaft, eine Maschine auszubilden, die das erfindungsgemäße Fanglager aufweist. Die Maschine weist dabei vorzugsweise ein Magnetlager zur betriebsmäßigen Lagerung der Rotorwelle auf. Die Maschine kann z.B. als Elektromotor oder Generator oder Kompressor oder Verdichter oder als Turbine ausgebildet sein. Die Maschine kann insbesondere als Windkraftgenerator ausgebildet sein.

Zwei Ausführungsbeispiele der Erfindung sind in der Zeichnung dargestellt und werden im Folgenden näher erläutert. Dabei zeigen:
- FIG 1: eine schematisierte Ansicht einer Maschine, die ein beispielhaftes Fanglager aufweist,
- FIG 2: eine perspektivische Darstellung des erfindungsgemäßen Fanglagers im Rahmen eines ersten Ausführungsbeispiels der Erfindung, und
- FIG 3: eine perspektivische Darstellung des erfindungsgemäßen Fanglagers im Rahmen eines zweiten Ausführungsbeispiels der Erfindung.

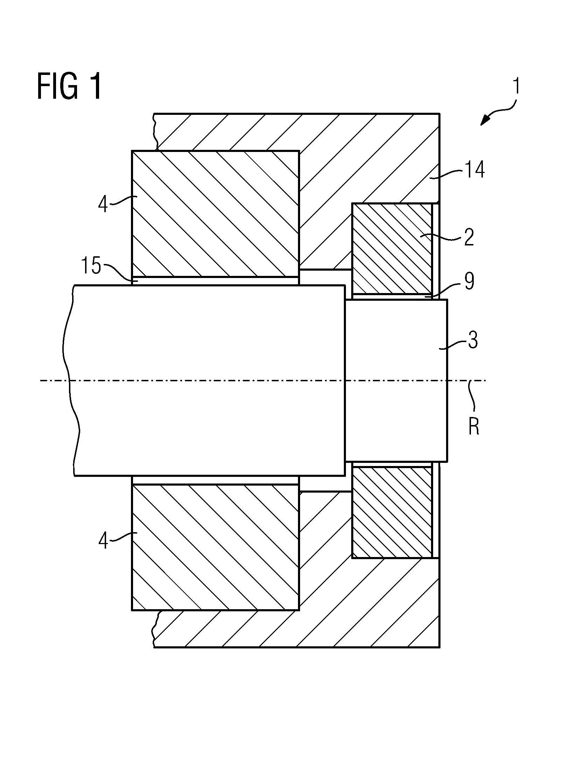

In FIG 1 sind in Form einer schematisierten Darstellung beispielhafte Elemente einer Maschine 1 dargestellt, die im Rahmen des Ausführungsbeispiels als Elektromotor ausgebildet ist. Andere Elemente der Maschine, wie z.B. Läuferjoch etc., sind der Übersichtlichkeit halber und da zum Verständnis der Erfindung unwesentlich nicht in FIG 1 dargestellt. Die Maschine 1 weist eine rotierbar angeordnete, mittels eines Magnetlagers 4 gelagerte Rotorwelle 3 auf, die im Betrieb der Maschine 1 um eine virtuelle geometrische Rotationsachse R rotiert.

Ein Magnetlager 4 hält die Rotorwelle 1 mit einem geregelten Magnetfeld in einem Luftspalt 15 in Schwebe. Das Magnetlager 4 weist hierzu als wesentliche Elemente Spulen zur Erzeugung des Magnetfelds auf.

Neben dem Magnetlager 4 weist die Maschine 1 ein Fanglager 2 auf, das bei einem Ausfall des Magnetlagers 4 die Rotorwelle 1 auffängt, wenn diese in das Fanglager 2 fällt, wobei das Fanglager die Lagerung der Rotorwelle 3 bis zum Stillstand übernimmt. Ein solcher Ausfall des Magnetlagers 4 kann z.B. bei einem Stromausfall der Maschine 1 und damit des Magnetlagers 4 auftreten. Es sei dabei an dieser Stelle angemerkt, dass das Fanglager 2 und das Magnetlager 4, in der schematisierten Schnittansicht in FIG 1, nur symbolisch in Form von Rechtecken dargestellt sind.

Weiterhin weist die Maschine 1 ein ruhendes Maschinengehäuse 14 auf, an dem das Fanglager 2 befestigt ist, wobei die Befestigung zwischen Fanglager 2 und Maschinengehäuse 14 der Übersichtlichkeit halber in FIG 1 nicht dargestellt ist.

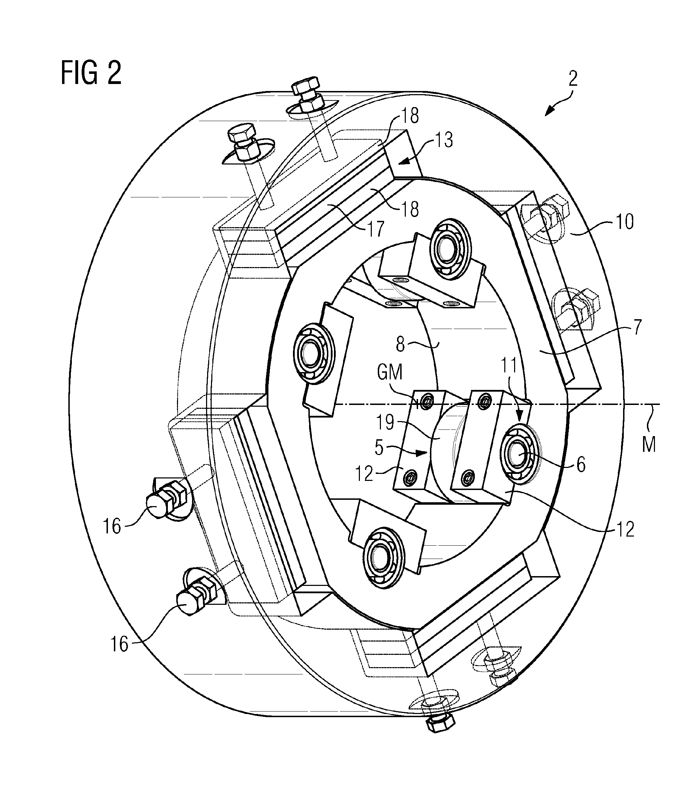

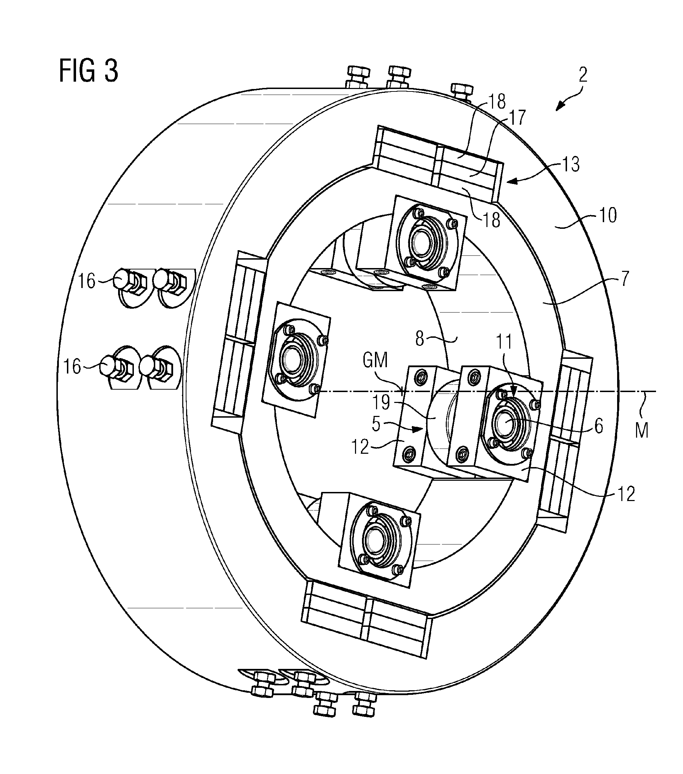

Zwischen dem Fanglager 2 und der Rotorwelle 3 ist ein Luftspalt 9 angeordnet. Bei einem angeschalteten und ordnungsgemäß funktionierenden Magnetlager 4 hat das Fanglager 2 keine Berührung mit der Rotorwelle 3. Bei einem Versagen des Magnetlagers 4, z.B. infolge eines Stromausfalls, fällt die Rotorwelle 3 in das Fanglager hinein und es kommt zu einem mechanischen Kontakt zwischen den Rollkörpern des erfindungsgemäßen Fanglagers (siehe FIG 2 und FIG 3) und der im Betrieb der Maschine 1 rotierenden, insbesondere schnell rotierenden, Rotorwelle 3.

In FIG 2 ist das erfindungsgemäße Fanglager in Form einer perspektivischen, teilweise durchsichtigen Darstellung, im Rahmen eines ersten Ausführungsbeispiels der Erfindung, dargestellt.

Das erfindungsgemäße Fanglager 2 weist einen um eine virtuelle geometrische Mittenachse M umlaufenden ersten Tragekörper 7 und Rollkörper auf, wobei der Übersichtlichkeit halber nur ein Rollkörper 5 mit einem Bezugszeichen versehen ist. Die Mittenachse M verläuft durch die geometrische Mitte GM des ersten Tragekörpers 7. Der erste Tragekörper 7 ist dabei im Rahmen des Ausführungsbeispiels als Ring ausgebildet. Der erste Tragekörper kann aber auch eine andere geometrische um die Mittenachse M umlaufende Form, wie z.B. eine quadratische Form, aufweisen. Die Rollkörper weisen einen Bereich 19 auf, der zwischen der Mittenachse M und dem ersten Tragekörper 7 angeordnet ist. Die einzelnen Rollkörper sind im Rahmen des Ausführungsbeispiels fest mit einer jeweilig zugehörigen vorzugsweise stabförmigen Achse (mechanische Achse) verbunden, wobei der Übersichtlichkeit halber nur eine Achse 6 mit einem Bezugszeichen versehen ist. Die Achse 6 ist über Wälzlager 11 drehbar vorzugsweise mit der Innenseite 8 des ersten Tragekörpers 7 verbunden. Die Wälzlager 11 sind an beiden Enden der Achse 6 angeordnet und durch Haltevorrichtungen 12 an der Innenseite 8 des ersten Tragekörpers 7 befestigt. Die Innenseite 8 des ersten Tragekörpers 7 ist hierzu im Rahmen des Ausführungsbeispiels mit Ausnehmungen versehen. Die einzelnen Rollkörper sind somit jeweilig über eine jeweilig zugeordnete Achse drehbar, mit dem ersten Tragekörpers 7 verbunden. Es sei dabei an dieser Stelle angemerkt, dass alternativ die einzelnen Rollkörper auch über eine jeweilig zugeordnete vorzugsweise stabförmigen Achse drehbar mit dem ersten Tragekörpers 7 verbunden sein können, indem die jeweilige Achse fest mit dem ersten Tragekörpers 7 verbunden ist und der jeweilige Rollkörper drehbar, z.B. über ein Wälzlager, mit der Achse verbunden ist. Die Rollkörper sind über den Umfang des ersten Tragekörpers gleichmäßig verteilt angeordnet. Die Rollkörper sind somit entlang dem Umfang des ersten Tragekörpers gleichmäßig beanstandet angeordnet.

Im Rahmen des Ausführungsbeispiels sind dabei die Rollkörper als Rollen ausgebildet.

Wenn die Rotorwelle 3 in das Fanglager 2 fällt, kommt sie in Kontakt mit der Außenfläche der Rollkörper, so dass die Rollkörper sich sofort zu drehen beginnen. Die Erfindung verhindert das Auftreten eines Backward-Whirls durch Minimierung der Reibeflächen, an denen die Rotorwelle 3 beim Auslaufen im Fanglager 2 abrollen kann. Die Rollkörper weisen nur eine sehr kleine Reibfläche auf die mit der Rotorwelle 3 in Kontakt tritt. Es tritt somit nur eine sehr kleine Reibung zwischen Fanglager und Rotorwelle auf. Im Rahmen einer vorteilhaften Ausführungsform der Erfindung wird die Reibung durch den Einsatz von Wälzlagern, in denen die Achsen gelagert sind, weiter minimiert. Die Rotorwelle 3 rollt auf der Außenfläche der Rollkörper ab. Durch die mittels der Erfindung erreichte sehr kleine Reibung zwischen Fanglager und Rotorwelle wird das Auftreten eines Backward-Whirl sicher verhindert.

Weiterhin weist das erfindungsgemäße Fanglager einen um den ersten Tragekörper 7 angeordneten zweiten Tragekörper 10 auf. Der zweite Tragekörper 10 ist dabei im Rahmen des Ausführungsbeispiels als Ring ausgebildet. Der zweite Tragekörper kann aber auch eine andere geometrische Form, wie z.B. eine quadratische Form, aufweisen. Zwischen dem ersten Tragekörper 7 und dem zweiten Tragekörper 10 sind elastische Elemente angeordnet, wobei der Übersichtlichkeit halber nur ein elastisches Element 13 mit einem Bezugszeichen versehen ist. Die elastischen Elemente weisen jeweilig eine Schicht 17 aus Gummi und zwei Schichten 18 aus Metall auf, wobei die Schicht 17 aus Gummi, zwischen den beiden Schichten 18 aus Metall angeordnet ist. Die elastischen Elemente sind solchermaßen als sogenannte Schwingmetalle ausgebildet. Die elastischen Elemente können dabei z.B. in Form von Feder-Dämpferelementen, die federnde und dämpfende Eigenschaften aufweisen ausgebildet sein oder auch in Form von Dämpferelementen (z.B. Stop-Shock), die überwiegend dämpfende Eigenschaften aufweisen, realisiert sein.

Durch die elastischen Elemente wird der Stoß, welcher auf die Rollkörper beim Aufprall der Rotorwelle einwirkt, effektiv abgefangen und somit z.B. die Rollkörper und die Wälzlager geschont.

Im Rahmen des Ausführungsbeispiels gemäß FIG 2 sind dabei die elastischen Elemente in tangentialer Richtung versetzt zu den Rollkörpern angeordnet, was eine baulich leicht zu realisierende Gesamtanordnung ermöglicht. Die elastischen Elemente sind dabei, im Rahmen des Ausführungsbeispiels gemäß FIG 2, bezogen auf die durch die geometrische Mitte GM des ersten Tragekörpers 7 verlaufende virtuelle geometrische Mittenachse M, um einen Wickel von 45° zu den Rollkörpern versetzt angeordnet.

In FIG 3 ist eine zweite Ausführungsform der Erfindung dargestellt. Diese Ausführungsform entspricht im Grundaufbau im Wesentlichen der vorstehend in FIG 2 beschriebenen Ausführungsform. Gleiche Elemente sind daher in FIG 3 mit den gleichen Bezugszeichen versehen wie in FIG 2. Der wesentliche Unterschied gegenüber der Ausführungsform gemäß FIG 2 besteht darin, dass bei der Ausführungsform gemäß FIG 3 die elastischen Elemente bezogen auf die virtuelle geometrische Mittenachse M des ersten Tragekörpers 7 radial fluchtend zu den Rollkörpern angeordnet sind. Die einzelnen Rollkörper sind somit in einer Linie mit ihrem jeweils zugehörigen elastischen Element angeordnet. Diese Ausführungsform hat den Vorteil, dass der Stoß, welcher auf die Rollkörper beim Aufprall der Rotorwelle einwirkt, besonders effektiv abgefangen werden kann, da die von dem Stoß erzeugte Kraft direkt in radiale Richtung in die elastischen Elemente eingeleitet wird und somit z.B. die Rollkörper und die Wälzlager besonders geschont werden und sich deren Belastung besonders stark reduziert.

Im Rahmen des Ausführungsbeispiels gemäß FIG 3 sind dabei jedem Rollkörper zwei elastische Elemente zugeordnet. Die Anzahl der elastischen Elemente, die pro Rollenkörper verwendet werden sowie deren Ausführung, können an die auftretenden Belastungen der Rollkörper und der zur Lagerung der Rollkörper verwendeten Wälzlager, angepasst werden.

Wie in FIG 2 und 3 dargestellt, sind die elastischen Elemente mittels Schrauben an dem zweiten Tragekörpers 10 befestigt, wobei der Übersichtlichkeit halber nur zwei Schrauben 16 mit einem Bezugszeichen versehen sind. Es sei an dieser Stelle angemerkt, dass die elastischen Elemente vorzugsweise vorgespannt sind, um deren Dämpfungswirkung zu erhöhen.

Die elastischen Elemente müssen dabei nicht unbedingt, wie im Ausführungsbeispiel, gleichmäßig über den Umfang des ersten Tragekörpers verteilt angeordnet sein. Weiterhin können die elastischen Elemente über den Umfang des ersten Tragekörpers beliebig zu den Rollkörpern angeordnet sein.

Weiterhin müssen auch die Rollkörper nicht unbedingt, wie im Ausführungsbeispiel, über den Umfang des ersten Tragekörpers gleichmäßig verteilt angeordnet sein.

Weiterhin sei an dieser Stelle angemerkt, dass selbstverständlich auch mehr als zwei Wälzlager pro Rollkörper zur Lagerung des Rollkörpers vorgesehen werden können.

Weiterhin sei angemerkt, dass das erfindungsgemäße Fanglager vorzugsweise mindestens drei Rollkörper aufweisen sollte, wobei das Fanglager selbstverständlich auch mehr als in den Ausführungsbeispielen gemäß FIG 2 und FIG 3 gewählte vier Rollkörper aufweisen kann.

Das erfindungsgemäße Fanglager verhindert mit hoher Wahrscheinlichkeit das Entstehen eines Backward-Whirls. Es ist sowohl für hohe Drehzahlen als auch für hohe Rotorwellengewichte geeignet. Weiterhin weist es einen geringen Platzbedarf auf.

## Patentansprüche

1. Fanglager zum Auffangen einer Rotorwelle (3) einer Maschine (1), wobei das Fanglager (2) einen um eine virtuelle geometrische Mittenachse (M) umlaufenden ersten Tragekörper (7) und Rollkörper (5) aufweist, wobei die Rollkörper jeweilig einen Bereich (19) aufweisen, der zwischen der Mittenachse (M) und dem ersten Tragekörper (7) angeordnet ist, wobei die Rollkörper (5) jeweilig über eine Achse (6) drehbar mit dem ersten Tragekörper (7) verbunden sind, wobei das Fanglager (2) einen um den ersten Tragekörper (7) angeordneten zweiten Tragekörper (10) aufweist, wobei zwischen erstem Tragekörper (7) und zweitem Tragekörper (10) elastische Elemente (13) angeordnet sind, **dadurch gekennzeichnet, dass**
die elastischen Elemente (13) jeweilig eine Schicht (17) aus Gummi und zwei Schichten (18) aus Metall aufweisen, wobei die Schicht (17) aus Gummi zwischen den beiden Schichten (18) aus Metall angeordnet ist.

2. Fanglager nach Anspruch 1,
**dadurch gekennzeichnet, dass** der erste Tragekörper (7) als Ring ausgebildet ist.

3. Fanglager nach Anspruch 1 oder 2,
**dadurch gekennzeichnet, dass** die Rollkörper (5) als Rollen ausgebildet sind.

4. Fanglager nach einem der vorherigen Ansprüche, **dadurch gekennzeichnet, dass** die Rollkörper (5) über den Umfang des ersten Tragekörpers (7) gleichmäßig verteilt angeordnet sind.

5. Fanglager nach einem der vorherigen Ansprüche, **dadurch gekennzeichnet, dass** die Rollkörper (5) jeweilig über eine Achse (6) und mindestens ein Wälzlager (11) drehbar mit dem ersten Tragekörper (7) verbunden sind.

6. Fanglager nach einem der vorhergehenden Ansprüche, **dadurch gekennzeichnet, dass** der zweite Trageköper (10) als Ring ausgebildet ist.

7. Fanglager nach einem der vorherigen Ansprüche, **dadurch gekennzeichnet, dass** die elastischen Elemente (13) als Feder-Dämpferelemente oder Dämpferelemente ausgebildet sind.

8. Fanglager nach Anspruch 6 oder 7,
**dadurch gekennzeichnet, dass** die elastischen Elemente (13), bezogen auf die virtuelle geometrische Mittenachse (M), radial fluchtend zu den Rollkörpern (5) angeordnet sind.

9. Fanglager nach Anspruch 6 oder 7,
**dadurch gekennzeichnet, dass** die elastischen Elemente (13) in tangentialer Richtung versetzt zu den Rollkörpern (5) angeordnet sind.

10. Maschine, wobei die Maschine (1) ein Fanglager (2) nach einem der vorhergehenden Ansprüche aufweist.

11. Maschine nach Anspruch 10,
**dadurch gekennzeichnet , dass** die Maschine (1) ein Magnetlager (4) zur betriebsmäßigen Lagerung der Rotorwelle (3) aufweist.

12. Maschine nach Anspruch 10 oder 11,
**dadurch gekennzeichnet , dass** die Maschine (1) als Elektromotor oder Generator oder Kompressor oder Verdichter oder als Turbine ausgebildet ist.

13. Maschine nach Anspruch 12,
**durch gekennzeichnet**, dass der Generator als Windkraftgenerator ausgebildet ist.

## Claims

1. Safety bearing for retaining a rotor shaft (3) of a machine (1), the safety bearing (2) having a first carrier body (7) rotating about a virtual geometrical central axis (M), and rolling bodies (5), the rolling bodies each having a region (19) which is arranged between the central axis (M) and the first carrier body (7), the rolling bodies (5) each being rotatably connected to the first carrier body (7) via a shaft (6), the safety bearing (2) comprising a second carrier body (10) arranged round the first carrier body (7), elastic elements (13) being arranged between the first carrier body (7) and the second carrier body (10), **characterised in that** said elastic elements (13) each comprise a layer (17) of rubber and two layers (18) of metal, the layer (17) of rubber being arranged between the two layers (18) of metal.

2. Safety bearing according to claim 1, **characterised in that** the first carrier body (7) is configured as a ring.

3. Safety bearing according to claim 1 or 2, **characterised in that** the rolling bodies (5) are configured as rollers.

4. Safety bearing according to one of the preceding claims, **characterised in that** the rolling bodies (5) are arranged evenly distributed round the periphery of the first carrier body (7).

5. Safety bearing according to one of the preceding claims, **characterised in that** the rolling bodies (5) are each rotatably connected to the first carrier body (7) via a shaft (6) and at least one roller bearing (11).

6. Safety bearing according to one of the preceding claims, **characterised in that** the second carrier body (10) is configured as a ring.

7. Safety bearing according to one of the preceding claims, **characterised in that** the elastic elements (13) are configured as spring damping elements or damping elements.

8. Safety bearing according to claim 6 or 7, **characterised in that** the elastic elements (13) are arranged, relative to the virtual geometrical central axis (M), radially aligned with the rolling bodies (5).

9. Safety bearing according to claim 6 to 7, **characterised in that** the elastic elements (13) are arranged offset in a tangential direction from the rolling bodies (5).

10. Machine, said machine (1) having a safety bearing (2) according to one of the preceding claims.

11. Machine according to claim 10, **characterised in that** the machine (1) comprises a magnetic bearing (4) for operational mounting of the rotor shaft (3).

12. Machine according to claim 10 or 11, **characterised in that** the machine (1) is configured as an electric motor or a generator or a compressor or a condenser or as a turbine.

13. Machine according to claim 12, **characterised in that** the generator is configured as a wind power generator.

## Revendications

1. Palier de retenue pour retenir un arbre (3) de rotor d'une machine (1), le palier (2) de retenue ayant un premier corps (7) de portée entourant un axe (M) médian géométrique virtuel et des corps (5) de roulement, les corps de roulement ayant respectivement une zone (19), qui est disposée entre l'axe (M) médian et le premier corps (7) de portée, les corps (5) de roulement étant reliés chacun par un axe (6), de manière à pouvoir tourner avec le premier corps (7) de portée, le palier (2) de retenue ayant un deuxième corps (10) de portée disposé autour du premier corps (7) de portée, des éléments (13) élastiques étant disposés entre le premier corps (7) de portée et le deuxième corps (10) de portée,
**caractérisé en ce que** les éléments (13) élastiques ont respectivement une couche (17) en caoutchouc et deux couches (18) en métal, la couche (17) en caoutchouc étant disposée entre les deux couches (18) en métal.

2. Palier de retenue suivant la revendication 1,
**caractérisé en ce que** le premier corps (7) de portée est constitué sous la forme d'un anneau.

3. Palier de retenue suivant la revendication 1 ou 2, **caractérisé en ce que** les corps (5) de roulement sont constitués sous la forme de rouleaux.

4. Palier de retenue suivant l'une des revendications précédentes,
**caractérisé en ce que** les corps (5) de roulement sont répartis uniformément sur le pourtour du premier corps (7) de portée.

5. Palier de retenue suivant l'une des revendications précédentes,
**caractérisé en ce que** les corps (5) de roulement sont reliés respectivement par un axe (6) et par au moins un palier à roulement, de manière à pouvoir tourner avec le premier corps (7) de portée.

6. Palier de retenue suivant l'une des revendications précédentes,
**caractérisé en ce que** le deuxième corps (10) de portée est constitué sous la forme d'un anneau.

7. Palier de retenue suivant l'une des revendications précédentes,
**caractérisé en ce que** les éléments (13) élastiques sont constitués sous la forme d'éléments amortisseurs à ressorts ou d'éléments amortisseurs.

8. Palier de retenue suivant la revendication 6 ou 7, **caractérisé en ce que** les éléments (13) élastiques sont, rapporté à l'axe (M) médian géométrique virtuel, alignés radialement par rapport aux corps (5) de roulement.

9. Palier de retenue suivant la revendication 6 ou 7, **caractérisé en ce que** les éléments (13) élastiques sont décalés en direction tangentielle par rapport aux corps (5) de roulement.

10. Machine, la machine (1) ayant un palier (2) de retenue suivant l'une des revendications précédentes.

11. Machine suivant la revendication 10, **caractérisée en ce que** la machine a un palier (4) magnétique pour supporter en fonctionnement l'arbre (3) du rotor.

12. Machine suivant la revendication 10 ou 11, **caractérisée en ce que** la machine est constituée sous la forme d'un moteur électrique ou d'une génératrice ou d'un compresseur ou d'un condenseur ou d'une turbine.

13. Machine suivant la revendication 12, **caractérisée en ce que** la génératrice est constituée sous la forme d'une génératrice d'éolienne.
